# EUROPÄISCHE PATENTSCHRIFT

(11) **EP 2 732 942 B1**
(45) Veröffentlichungstag und Bekanntmachung des Hinweises auf die Patenterteilung: **01.02.2017**
(21) Anmeldenummer: 13005064.4
(22) Anmeldetag: 23.10.2013
(51) Int. Cl.: B27B 5/06, B23D 59/00, B27M 1/08

(54) **Portalzuschnittmaschine und Verfahren zum Zuschneiden großformatiger Platten**
Portal cutting machine and method for cutting up large-scale panels
Machine de découpe de portail et procédé de découpe de plaques grand format

(30) Priorität: 20.11.2012 DE 102012022579
(43) Veröffentlichungstag der Anmeldung: 21.05.2014
(73) Patentinhaber: IMA Klessmann GmbH Holzbearbeitungssysteme, 32312 Lübbecke (DE)
(72) Erfinder: Schürmann, Ralf, DE - 32351 Stemwede (DE)
(74) Vertreter: Schober, Mirko

(56) Entgegenhaltungen:
- EP-A1- 1 510 276
- EP-A1- 2 251 128
- EP-A1- 2 253 403
- EP-B1- 2 098 343
- WO-A1-99/33600
- WO-A2-2010/094565

## Beschreibung

Die Erfindung betrifft eine Portalzuschnittmaschine, gemäß dem Oberbegriff des Anspruchs 1 und ein Verfahren zum Schneiden gemäß Anspruch 8, wie z.B. aus EP2098343 A1 bekannt sind.

Bei entsprechenden Maschinen werden großformatige Platten aus Holz oder Holzwerkstoffen in kleine Platten aufgeteilt. Dabei werden die Platten durch einen Fräser oder eine Säge zerteilt, wobei eine Zeilenabarbeitung erfolgt, das bedeutet, es werden erst in Vorschubrichtung Schnitte durchgeführt und dann Trennschnitte senkrecht dazu. Die Platte wird dabei weiter durch das Fräsportal geschoben, bis diese vollständig entsprechend des vorgegebenen Schnittmusters zerteilt ist.

Die Art des Vorgehens ist einerseits verschnittbehaftet, weil zumindest die Bereiche, in denen die zur Führung der Platte vorgesehene Greifeinrichtung vorgesehen ist, nicht bearbeitet werden können, zum Anderen muss das Fräsportal für Rückschnitte in der Regel sowohl in Vorschubrichtung als auch senkrecht quer dazu verfahrbar sein, was die Kosten einer solchen Vorrichtung erhöht.

Aufgabe der vorliegenden Erfindung ist es daher, eine Portalzuschnittmaschine zur Verfügung zu stellen, mit der der Verschnitt minimiert werden kann und die insbesondere kostengünstiger hergestellt werden kann. Weiter ist die Aufgabe, ein entsprechendes Arbeitsverfahren anzugeben, mit dem der Verschnitt bei einer großformatigen Platte reduziert werden kann.

Gelöst wird diese Aufgabe durch eine Portalzuschnittmaschine zum Zuschneiden großformatiger Platten mit den Merkmalen des Anspruchs 1 sowie durch ein Verfahren zum Zuschneiden großformatiger Platten mit den Merkmalen des Anspruchs 8. Vorteilhafte Ausführungsformen finden sich in den Unteransprüchen.

Die erfindungsgemäße Portalzuschnittmaschine zeichnet sich durch zwei Sorten Greifeinrichtungen aus, von denen die einen in Vorschubrichtung der Platte und die anderen in der Vorschub- als auch der Querrichtung verschieblich angeordnet sind. Dadurch wird es möglich, während der Bearbeitung den Angriffspunkt einzelner Greifeinrichtungen zu verändern und durch diese Möglichkeit des Umgreifens den Verschnitt zu reduzieren. Eine Zuschnittbearbeitung mittels des wenigstens, bevorzugt ausschließlich, in Querrichtung beweglichen Zuschnittaggregats, welches z.B. einen Fräser und/oder eine Säge und/oder ein Bohraggregat aufweisen kann, ist so an faktisch jedem Ort der Platte ohne signifikante Einschränkungen möglich.

Das Zuschnittaggregat ist bevorzugt in Richtung senkrecht zum Boden bzw. senkrecht zur großformatigen Platte zustellbar ausgebildet. So kann eine Zustellung zum Ausführen der Schnitte bevorzugt nur in einer Raumrichtung, der Vertikalrichtung, erfolgen.

Für die Greifeinrichtungen können unterschiedliche Mechanismen zur Erfassung der Platte eingesetzt werden. Bevorzugt ist dabei vorgesehen, dass es sich bei den ersten und/oder zweiten Greifeinrichtungen um Spannzangen und/oder Saugspannvorrichtungen handelt.

Um das Umgreifen der Greifeinrichtungen zu ermöglichen, kann insbesondere vorgesehen sein, dass wenigstens im Bereich des Zuschnittportals eine lokal im Ansprechen auf die Anwesenheit einer Spanneinrichtung nachgiebige Auflage zum Auflegen der großformatigen Platte vorgesehen ist.

Diese Auflage senkt sich lokal dort ab, wo ein Angreifen oder Untergreifen der Platte erfolgen soll. Dazu kann bevorzugt vorgesehen sein, dass die Auflage eine Bürstenauflage, diese gibt unter Druck der Greifeinrichtung lokal mechanisch nach, oder eine elektronisch angesteuerte Auflage mit lokal absenkbaren Auflageelementen ist.

Durch diese Maschinenanordnung ist ein Zuschneiden der Platte auf sehr einfache Art und Weise möglich.

Hierbei wird immer ein senkrechter und anschließend ein waagerechter Schnitt ausgeführt und die einzelnen Plattenteile werden so nach und nach von der Großformatplatte abgetrennt und über den Entnahmeabschnitt, der etwa einen Rollenförderer aufweisen kann, ausgetragen.

Insbesondere werden die an der Platte angreifenden Greifeinrichtungen in oder entgegen der Vorschubrichtung verfahren, um die Schnitte in Vorschubrichtung durchzuführen.

Für die Schnitte in Querrichtung wird bevorzugt das Zuschnittaggregat in Querrichtung verschoben. Damit während der wiederholten, abwechselnd senkrechten oder waagerechten (oder umgekehrt erfolgenden) Schnitte keine Behinderung durch die Greifeinrichtungen erfolgt, ist vorgesehen, dass während des Zuschneidens oder Verschiebens der Platte wenigstens eine der Greifeinrichtungen aus dem Eingriff mit der Platte gelöst wird, wenn das vorgegebene Schnittmuster einen Schnitt im Greifbereich der Greifeinrichtung vorsieht.

Weiter kann auch vorgesehen sein, dass eine andere Greifeinrichtung an anderer vorgegebener Stelle wieder in Eingriff mit der Platte gebracht wird. Dadurch kann z.B. an anderer Stelle der Platte für den nötigen Halt der Platte gesorgt werden.

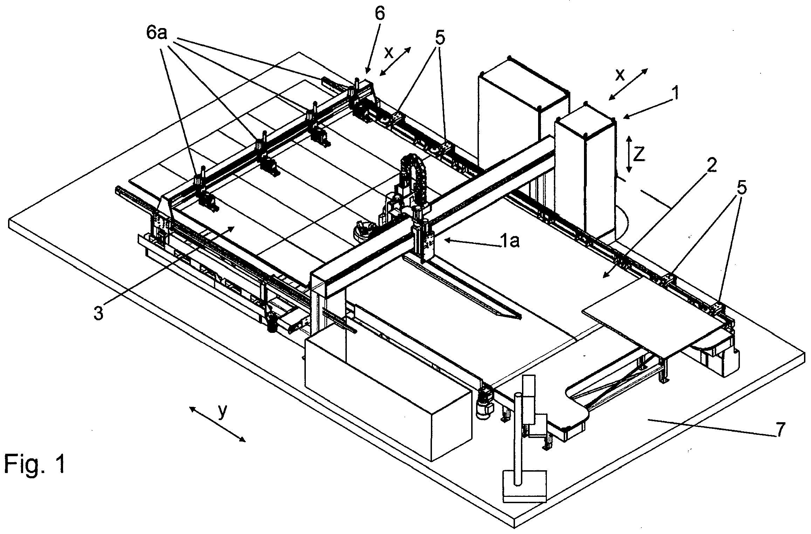

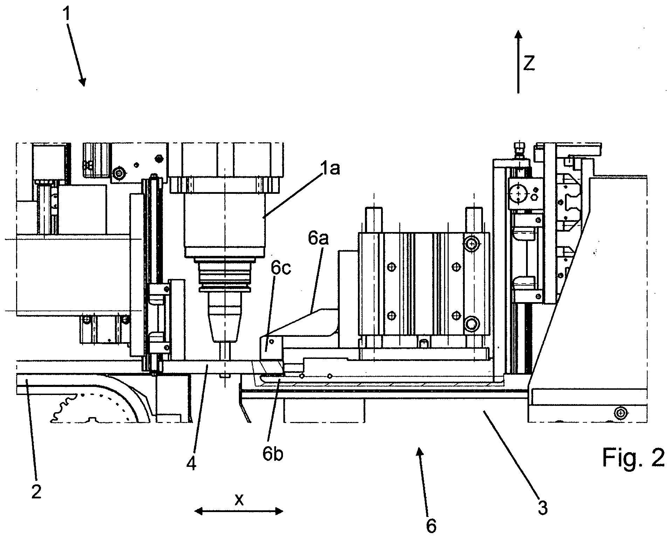

Die Erfindung wird nachfolgend anhand der Figuren 1 und 2 näher erläutert.
Figur 1 zeigt eine perspektivische Ansicht einer erfindungsgemäßen Portalzuschnittvorrichtung.
Figur 2 zeigt eine Seitenansicht im Bereich des Portals der Vorrichtung aus Figur 1.

Die in den Figuren gezeigte Portalzuschnittvorrichtung weist einen Aufgabeabschnitt 3 und einen Entnahmeabschnitt 2 auf, zwischen denen das Portal 1 angeordnet ist. Die Abschnitte 2 und 3 dienen als Support zur Auflage einer großformatigen Platte 4 (vgl. Fig. 2), welche in Vorschubrichtung Y durch das Portal 1 beim Zuschneiden verschoben werden kann.

Zum Zuschneiden ist am Portal ein Zuschnittaggregat 1a in Querrichtung X quer zur Vorschubrichtung Y verschieblich. Die Richtungen X und Y liegen parallel zum Boden 7, auf welchem die Vor-richtung aufgestellt ist. Prinzipiell ist es möglich, das Zuschnittaggregat 1a auch in Richtung Y zu verschieben, eine besonders bevorzugte Ausführungsform sieht aber vor, dass das Zuschnittaggregat zum Schneiden (Sägen oder Fräsen) ausschließlich in Querrichtung X verfahrbar ist. Zudem kann es senkrecht zum Boden 7 in Vertikalrichtung Z der Platte 4 zugestellt werden.

Es sind erste und zweite Greifeinrichtungen vorgesehen. Die ersten Greifeinrichtungen 5 - Greifeinrichtungen können z.B. Spannzangen oder Saugspanner sein - sind in Richtung Y entlang eines Randes bzw. einer Längsseite der Vorrichtung verschieblich angeordnet und können vom Beginn des Abschnitts 3 bis zum Ende des Abschnitts 2 über die gesamte Länge der Vorrichtung verschoben werden.

Die zweiten Greifeinrichtungen 6a sind jede für sich in Querrichtung X verschieblich angeordnet. Sie sind auf einer Vorrichtung und damit die Platte 4 in Querrichtung X überspannenden Traverse 6 angeordnet, welche ihrerseits in Vorschubrichtung Y verschieblich ist.

In Figur 2 sind die zweiten Greifeinrichtungen 6a genauer gezeigt, die dort als Greifzangen ausgebildet sind. Die Greifzangen 6a, welche aus einem oberen Greiffinger 6c und einem unteren Greifelement 6b gebildet sind, können in Vertikalrichtung an der Traverse 6 verfahren werden. Damit ein Greifen der Platte 4 möglich ist, ist der Support 2, 3 darunter so ausgebildet, dass dieser lokal bei Vorhandensein eines unteren Greifelementes nachgibt. Dies kann durch einen Bürstenteppich geschehen, der mechanisch nachgibt. Die Auflage kann aber auch durch einzelne Auflageelemente gebildet werden, die bei Anwesenheit eines Greifers oberhalb der Auflageelemente lokal abgesenkt werden. Diese Steuerung kann elektronisch oder mechanisch erfolgen. Auf diese Weise ist ein Umgreifen während des Zuschneidens der Platte möglich und das Aggregat 1a kann prinzipiell jede Stelle der Platte ungehindert erreichen.

Die großformatige Platte 4 wird also von den Greifeinrichtungen 5 und 6a gegriffen und in Vorschubrichtung Y durch das Zuschnittportal 1 geführt und dort bearbeitet. Dabei wird erfindungsgemäß jeweils ein Schnitt in Richtung X oder Y und anschließend daran angrenzend ein Schnitt in Richtung Y oder X durchgeführt. Es erfolgen also immer rechtwinklige Schnitte entlang der vorgegebenen Schnittlinien bis die gesamte Platte 4 abgearbeitet ist. Trennschnitte über die gesamte Breite der Platte erfolgen bei dieser Vorgehensweise nicht.

Durch die Möglichkeit des Umgreifens der Greifeinrichtungen kann so die komplette Platte so gut wie verschnittfrei abgearbeitet werden. Dabei können bei Bedarf zusätzliche Greifer dort unterstützend eingesetzt werden, wo ansonsten ein Zuschnitt nicht möglich ist, dies ist vor allem bei kleinen länglichen Teilen der Fall. Auch können Greifer dort "abgezogen" werden, wo sie gerade nicht benötigt werden.

## Patentansprüche

1. Portalzuschnittmaschine, insbesondere Portalfräsmaschine, zum Zuschneiden einer großformatigen Platte aus Holz oder Holzwerkstoffen, mit einem Aufgabeabschnitt (3) zum Auflegen einer großformatigen Platte (4), einem Entnahmeabschnitt (2) zum Entnehmen von zugeschnittenenen Plattenteilen und einem Zuschnittportal (1) zum Durchführen von Trenn- und Rückschnitten in der großformatigen Platte, wobei erste (5) und zweite Greifeinrichtungen (6a) zum Greifen der großformatigen Platte (4) vorgesehen sind, wobei die ersten Greifeinrichtungen (5) in einer Vorschubrichtung (Y) entlang eines Randes der Portalzuschnittmaschine verschieblich ausgebildet sind, wobei das Zuschnittportal (1) ein in einer Querrichtung (X) quer zur Vorschubrichtung (Y) verschiebliches Zuschnittaggregat (1a) zum Zuschneiden der großformatigen Platte (4) aufweist,
**dadurch gekennzeichnet,**
**dass** die zweiten Greifeinrichtungen (6a) in der Querrichtung (X) und parallel zum Boden (7) verschieblich an einer in Vorschubrichtung (Y) verschieblichen Führungsvorrichtung (6) gelagert sind.

2. Portalzuschnittmaschine nach Anspruch 1,
**dadurch gekennzeichnet,**
**dass** das Zuschnittaggregat (1a) einen Fräser und/ oder eine Säge und/oder ein Bohraggregat aufweist.

3. Portalzuschnittmaschine nach einem der vorigen Ansprüche,
**dadurch gekennzeichnet,**
**dass** das Zuschnittaggegat (1a) zum Durchführen der
Schnitte ausschließlich in Querrichtung (X) parallel zum Boden beweglich ist.

4. Portalzuschnittmaschine nach einem der vorigen Ansprüche,
**dadurch gekennzeichnet,**
**dass** das Zuschnittaggregat (1a) in Richtung (Z) senkrecht zum Boden bzw. senkrecht zur großformatigen Platte (4) zustellbar ausgebildet ist.

5. Portalzuschnittmaschine nach einem der vorigen Ansprüche,
**dadurch gekennzeichnet,**
**dass** es sich bei den ersten und/oder zweiten Greifeinrichtungen (5, 6a) um Spannzangen und/oder Saugspannvorrichtungen handelt.

6. Portalzuschnittmaschine nach einem der vorigen Ansprüche,
**dadurch gekennzeichnet,**
**dass** wenigstens im Bereich des Zuschnittportals (1) eine lokal im Ansprechen auf die Anwesenheit einer Spanneinrichtung (5, 6a) nachgiebige Auflage zum Auflegen der großformatigen Platte vorgesehen ist.

7. Portalzuschnittmaschine nach Anspruch 6,
**dadurch gekennzeichnet,**
**dass** die Auflage eine Bürstenauflage oder eine elektronisch angesteuerte Auflage mit lokal absenkbaren Auflageelementen ist.

8. Verfahren zum Zuschneiden einer großformatigen Platte, insbesondere in einer Portalzuschnittmaschine nach einem der vorigen Ansprüche, aufweisend folgende Schritte:
a. Bereitstellen einer großformatigen Platte (4) ;
b. Einspannen der Platte (4) mittels jeweils in Vorschubrichtung (Y) verfahrbaren ersten und zweiten Greifeinrichtungen (5, 6a);
c. Positionieren eines in einer Querrichtung (X) quer zur Vorschubrichtung (Y) verfahrbaren Zuschnittaggregats (1a) an einer vorgegebenen Startposition;
d. Durchführen eines ersten Schnittes mit dem Zuschnittaggregat (1a) in einer ersten Richtung (Y oder X);
e. Durchführen eines zweiten an den ersten Schnitt angrenzenden zweiten Schnittes in einer Richtung (X oder Y) senkrecht zum ersten Schnitt;
f. Positionieren des Zuschnittaggregates zur nächsten vorgegebenen Zuschnittposition ; und
g. Wiederholen der Schritte d., e. und f,
**dadurch gekennzeichnet,**
**dass** während des Zuschneidens oder Verschiebens der Platte (4) wenigstens eine der Greifeinrichtungen (5, 6a) aus dem Eingriff mit der Platte (4) gelöst wird, wobei die wenigstens eine gelöste Greifeinrichtung (5, 6a) an anderer vorgegebener Stelle wieder in Eingriff mit der Platte (4) gebracht wird.

9. Verfahren nach Anspruch 8,
**dadurch gekennzeichnet,**
**dass** zum Durchführen von Schnitten in Vorschubrichtung (Y) die Greifeinrichtungen (5, 6a) in Vorschubrichtung oder entgegen der Vorschubrichtung (Y) verschoben werden.

10. Verfahren nach Anspruch 8 oder 9,
**dadurch gekennzeichnet,**
**dass** zum Durchführen von Schnitten in Querrichtung (X) das Zuschnittaggregat (1a) in Querrichtung (X) verschoben wird.

11. Verfahren nach einem der Ansprüche 8 bis 10,
**dadurch gekennzeichnet,**
**dass** eine andere Greifeinrichtung an ande-rer vorgegebener Stelle wieder in Eingriff mit der Platte (4) gebracht wird.

## Claims

1. Portal cutting machine, more particularly a portal milling machine, for cutting up large-scale panels of wood or wooden materials, with a function section (3) for placing a large-scale panel (4), a removal section (2) for removing the cut-up panel parts, and a cutting portal (10 for carrying out the separating and cutting back cuts in the large-scale panel, wherein first (5) and second gripping devices (6a) are provided for gripping the large-scale panels (4), wherein the first gripping devices (5) are configured displaceable in a feed direction (Y) along an edge of the portal cutting machine, wherein the cutting portal (1) has a cutting assembly (1a) for cutting up the large-scale panel (4), this assembly displaceable in a transverse direction (X) across the feed direction (Y), **characterised in that** the second gripping devices (6a) are mounted displaceable in the transverse direction (X) and parallel to the base (7) on a guide device (6) which is displaceable in the feed direction (Y).

2. Portal cutting machine according to claim 1, **characterised in that** the cutting assembly (1 a) has a milling cutter and/or a saw and/or a drilling unit.

3. Portal cutting machine according to one of the previous claims, **characterised in that** the cutting assembly (1 a) for carrying out the cuts is movable solely in the transverse direction (X) parallel to the base.

4. Portal cutting machine according to one of the previous claims, **characterised in that** the cutting assembly (1 a) is configured to be set up in the direction (Z) perpendicular to the base or perpendicular to the large-scale panel (4).

5. Portal cutting machine according to one of the previous claims, **characterised in that** the first and/or second gripping devices (5, 6) are clamping jaws and/or suction clamping devices.

6. Portal cutting machine according to one of the previous claims, **characterised in that** a support for supporting the large-scale panel is provided at least in the region of the cutting portal (1) and is flexible locally in response to the presence of a clamping device (5, 6a).

7. Portal cutting machine according to claim 6, **characterised in that** the support is a brush support or an electronically controlled support with locally drop-down support elements.

8. Method for cutting up a large-scale panel, more particularly in a portal cutting machine according to one of the previous claims, having the follow steps:
a. providing a large-scale panel (4);
b. clamping the panel (4) by means of first and second gripping devices (5, 6a) which are each movable in the feed direction (Y);
c. positioning a cutting assembly (1 a) at a predetermined starting position, the assembly being movable in a transverse direction (X) transversely to the feed direction (Y);
d. carrying out a first cut with the cutting assembly (1 a) in a first direction (Y or X);
e. carrying out a second cut adjacent the first cut in a direction (X or Y) perpendicular to the first cut;
f. positioning the cutting assembly for the next proposed cutting position; and
g. repeating steps d., e. and f., **characterised in that** during the cutting or displacement of the panel (4) at least one of the gripping devices (5, 6a) is released from the engagement with the panel (4), wherein the at least one released gripping device (5, 6a) is brought into engagement with the panel (4) again at a different proposed position.

9. Method according to claim 8, **characterised in that** for carrying out cuts in the feed direction (Y) the gripping devices (5, 6a) are moved in the feed direction or against the feed direction (Y).

10. Method according to claim 8 or 9, **characterised in that** for carrying out cuts in the transverse direction (X) the cutting assembly (1 a) is moved in the transverse direction (X).

11. Method according to one of claims 8 to 10, **characterised in that** another gripping device is brought into engagement again with the panel (4) at another proposed position.

## Revendications

1. Machine de découpe à portique, en particulier fraiseuse à portique, pour découper une plaque de grand format, en bois ou en matériaux dérivés du bois, avec une section de chargement (3) pour le chargement d'une plaque de grand format (4), une section de déchargement (2) pour le déchargement des morceaux de plaque découpés, et un portique de découpe (1) pour sectionner et ébouter la plaque de grand format, sachant que des premières installations de préhension (5) et des deuxièmes installations de préhension (6a) sont prévues pour saisir la plaque de grand format (4), les premières installations de préhension (5) étant conçues pour pouvoir se déplacer le long d'un bord du portique de découpe (1), dans une direction d'avance (Y), sachant que le portique de découpe (1) présente un groupe de découpe (la), qui, destiné à découper la plaque de grand format (4), peut être déplacé dans une direction transversale (X), transversalement par rapport à la direction d'avance (Y), **caractérisée en ce que**
les deuxièmes installations de préhension (6a) sont montées, déplaçables dans la direction transversale (X) et parallèlement au sol (7), sur un dispositif de guidage (6) qui peut être déplacé dans la direction d'avance (Y).

2. Machine de découpe à portique selon la revendication 1,
**caractérisée en ce que**
le groupe de découpe (1a) présente une fraiseuse et / ou une scie et / ou une unité de perçage.

3. Machine de découpe à portique selon l'une des revendications précédentes,
**caractérisée en ce que**
le groupe de découpe (la), lors de l'exécution des découpes, est exclusivement mobile dans la direction transversale (X), parallèlement au sol.

4. Machine de découpe à portique selon l'une des revendications précédentes,
**caractérisée en ce que**
le groupe de découpe (1a) est de conception réglable dans la direction (Z), perpendiculairement au sol, respectivement perpendiculairement à la plaque de grand format (4).

5. Machine de découpe à portique selon l'une des revendications précédentes
**caractérisée en ce que**
les premières et / ou les deuxièmes installations de préhension (5, 6a) sont des pinces de serrage et / ou des dispositifs de serrage par aspiration.

6. Machine de découpe à portique selon l'une des revendications précédentes,
**caractérisée en ce que**,
dans le secteur du portique de découpe (1) au moins, un support localement flexible, répondant à la présence d'un dispositif de serrage (5, 6a), est prévu pour accueillir la plaque de grand format (4).

7. Machine de découpe à portique selon la revendication 6,
**caractérisée en ce que**
le support est un support à brosses ou un support à commande électronique, avec des éléments de support abaissables localement.

8. Procédé de découpe d'une plaque de grand format, en particulier avec une machine de découpe à portique selon l'une des revendications précédentes, qui comprend les étapes suivantes :
a. mise à disposition d'une plaque de grand format (4);
b. serrage de la plaque (4) au moyen de premières et de deuxièmes installations de préhension (5, 6a), qui peuvent être déplacées chacune dans la direction d'avance (Y) ;
c. positionnement, dans une position de départ prédéterminée, d'un groupe de découpe (1a) déplaçable dans une direction transversale (X), transversalement par rapport à la direction d'avance (Y);
d. exécution d'une première coupe avec le groupe de découpe (la), dans une première direction (Y ou X);
e. exécution d'une deuxième coupe, adjacente à la première coupe, dans une direction (X ou Y) perpendiculairement à la première coupe;
f. positionnement du groupe de découpe à la prochaine position de coupe prédéterminée; et
g. répétition des étapes d., e. et f.,
**caractérisé en ce que**,
pendant la coupe ou le déplacement de la plaque (4), au moins l'une des installations de préhension (5, 6a) n'est plus en prise avec la plaque (4), sachant que l'au moins une installation de préhension (5, 6a) hors de prise est de nouveau mise en prise avec la plaque (4) à un autre endroit prédéterminé.

9. Procédé selon la revendication 8,
**caractérisé en ce que**
pour l'exécution de découpes dans la direction d'avance (Y), les installations de préhension (5, 6a) sont déplacées dans la direction d'avance ou contre la direction d'avance (Y).

10. Procédé selon revendication 8 ou 9,
**caractérisé en ce que**,
pour l'exécution de découpes dans la direction transversale (X), le groupe de découpe (1a) est déplacé dans la direction transversale (X).

11. Procédé selon l'une des revendications 8 à 10,
**caractérisé en ce que**
une autre installation de préhension peut être amenée à un autre emplacement pour entrer de nouveau en prise avec la plaque (4).
